# EUROPEAN PATENT SPECIFICATION

(11) **EP 2 105 344 B1**
(45) Date of publication and mention of the grant of the patent: **27.10.2010**
(21) Application number: 09154759.6
(22) Date of filing: 10.03.2009
(51) Int. Cl.: B60N 2/06

(54) **Power seat slide apparatus**
Stromgetriebene Sitzschiebevorrichtung
Appareil coulissant de siège électrique

(30) Priority: 24.03.2008 JP 2008076242
(43) Date of publication of application: 30.09.2009
(73) Proprietor: AISIN SEIKI KABUSHIKI KAISHA, Kariya-shi, Aichi 448-8650 (JP)
(72) Inventor: Koga, Yoshitaka, Kariya-shi Aichi 448-8650 (JP); Shimizu, Jueru, Kariya-shi Aichi 448-8650 (JP)
(74) Representative: TBK-Patent

(56) References cited:
- JP-U- 2 000 252
- US-A- 5 150 872

## Description

### FIELD OF THE INVENTION

The present invention relates to a power seat slide apparatus applied to a seat for a vehicle.

### BACKGROUND

A known power seat slide apparatus, which slides an upper rail relative to a lower rail in a longitudinal direction of a vehicle by rotating a screw shaft by means of a rotation of a motor, is disclosed in JP-A-2000252U. According to the power seat slide apparatus disclosed in JP-A-2000252U; a stopper is provided at each of front and rear portions of the screw shaft, and a moving distance of the upper rail, that is, a moving distance of the seat in a longitudinal direction thereof is restricted by contacting the stopper and a reduction gear portion.

Notwithstanding, according to the construction of the power seat slide apparatus disclosed in JP-A-2000252U because stoppers are required to be provided at the front and rear portions of the screw shaft, respectively, in order to restrict the moving distance of the seat, drawbacks arise that manufacturing cost is increased and a large degree of design change is required when a distance (referred as stroke) between the stopper is needed to be changed.

A need thus exists for a power seat slide apparatus that enables to restrict a moving distance of a seat which operates by means of a large load, reduces manufacturing cost, and enables to change a stroke, for example, for applying the apparatus to various types of vehicles with reduced manufacturing cost.

### SUMMARY OF THE INVENTION

In light of the foregoing, the present invention provides a power seat slide apparatus, which includes a lower rail adapted to be provided at a vehicle floor, an upper rail slidably supported by the lower rail for retaining a vehicle seat, the upper rail having a pair of walls formed on right and left sides thereof, a lead screw member rotatably supported by the upper rail and extending in a sliding direction of the upper rail, a lead screw nut member provided at the lower rail and threadedly engaged with the lead screw member, an output rotation member provided at the upper rail and rotationally connected to the lead screw member, a gearbox rotatably supporting the output rotation member, a drive unit transmitting a rotational drive force to the lead screw member via the output rotation member supported by the gearbox, characterised in that a pair of cut-and-bent-away portions, each cut-and-bent-away portion is formed on each of the walls of the upper rail and is arranged at positions to face the lead screw nut member and to contact the lead screw nut member at stroke ends of the upper rail in a front-rear direction thereof.

According to the present invention, the cut-and-bent-away portion is formed on each of the walls of the upper rail at the position to face the lead screw nut member and to come in contact with the lead screw nut member at stroke end positions of the upper rail. Thus, with a minimum construction of parts, that is, providing additional machining of the upper rail to form the cut-and-bent-away portion, a stroke of the upper rail, or the vehicle seat which operates with considerable level of load is restricted, thereby reducing the manufacturing cost.

According to an embodiment of the power seat slide apparatus according to the present invention, the lower rail includes a pair of walls formed on right and left sides thereof, each of the cut-and-bent-away portions includes an end portion and a bending portion where the cut-and-bent-away portion is bent, and wherein the bending portion is positioned at a higher level than a top end of the wall of the lower rail in a state where the upper rail and the lower rail are engaged.

According to an embodiment of the present invention, because either the end portion of each of the cut-and-bent-away portions or the bending portion serving as the supporting point for bending of each of the cut-and-bent-away portions is positioned higher than the top end of the walls functioning as a pair provided at the right side and left side of the lower rail in a state where the upper rail and the lower rail are engaged, the workspaces for bending each of the cut-and-bent-away portions are ensured even after assembling the seat. Accordingly, in a case where the power seat slide apparatus is mounted to various types of vehicles, the plural bending slots may be formed on the walls of the upper rail in advance and each of the cut-and-bent-away portions which is positioned so as to be compatible to a particular type of the vehicle may be bent. Accordingly, the parts of the upper rail are standardized, thereby reducing the manufacturing cost.

According to further embodiment of the power seat slide apparatus according to the present invention, one of the end portion and the bending portion of each of the cut-and-bent-away portions is arranged at positions higher than a reference horizontal surface which crosses a center of a rotational shaft of the lead screw member, and the other of the end portion and the bending portion of each of the cut-and-bent-away portions is arranged at positions lower than the reference horizontal surface which crosses the center of the rotational shaft of the lead screw member.

According to an embodiment of the present invention, each of the end portions of the cut-and-bent-away portions and each of the bending portions serving as the supporting point for bending are arranged to be positioned at the lower level and the upper level relative to the reference horizontal surface which crosses the rotational axis of the lead screw member, respectively. Thus, because each of the cut-and-bent-away portions is arranged to extend to overlap the rotational axis center of the lead screw member, in the event that each of the cut-and-bent-away portions comes in contact with either the front surface or the rear surface of the lead screw nut member, each of the cut-and-bent-away portions receive the load of the rotational axis of the lead screw member without inclining. Accordingly, a considerable level of the load by the motor rotation is stably received, thereby stopping the lead screw member safely without being damaged by the flexural load. Accordingly, the reliability of the power seat slide apparatus is enhanced.

According to still another embodiment of the power seat slide apparatus according to the present invention, the end portion of the each of the cut-and-bent-away portions is positioned higher than the top end of the wall of the lower rail in a state where the upper rail and the lower rail are engaged, and the bending portion is positioned lower than the reference horizontal surface which crosses the center of the rotational shaft of the lead screw member.

According to still a further embodiment of the power seat slide apparatus according to the present invention, the bending portion of each of the cut-and-bent-away portions is positioned higher than the top end of the wall of the lower rail in a state where the upper rail and the lower rail are engaged, and the end portion is positioned lower than the reference horizontal surface which crosses the center of the rotational shaft of the lead screw member.

According to still a further embodiment of the power seat slide apparatus according the present invention, each of the walls of the upper rail includes a bending slot formed either approximately in a U-shape or approximately in an inversed U-shape and a tongue portion formed within the bending slot, and the bending portion is formed by bending the tongue portion towards an inside of an opening portion opening downward of the upper rail.

According to another embodiment of the power seat slide apparatus according the present invention, said pair of cut-and-bent-away portions include first and second pairs of cut-and-bent-away portions provided at an upper portion and a lower portion of the walls of the upper rail, respectively.

According to still another embodiment of the power seat slide apparatus according the present invention, the bending portions of the cut-and-bent-away portions provided at the upper portion and the lower portion of each of the walls of the upper rail are positioned at the higher level and the lower level relative to a reference horizontal surface which crosses a center of a rotational shaft of the lead screw member, respectively.

According to a further embodiment of the power seat slide apparatus according the present invention, the end portions of the cut-and-bent-away portions provided at the upper portion and the lower portion of each of the walls of the upper rail are positioned at the higher level and the lower level relative to a reference horizontal surface which crosses a center of a rotational shaft of the lead screw member, respectively.

According to still a further embodiment of the present invention, the power seat slide apparatus further includes a bending slot formed in an approximately H shape and formed on each of the walls of the upper rail, and a tongue portion formed within the bending slot. The bending portion is formed by bending the tongue portion towards an inside of an opening portion opening downward of the upper rail.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a perspective view of a seat for a vehicle;

Fig. 2 is a lateral view of the seat for the vehicle having a power seat slide apparatus according to embodiments of the present invention;

Fig. 3 is a cross-sectional view of the power seat slide apparatus when cross-sectioning in a longitudinal direction of an upper rail and a lower rail according to the embodiment of the present invention;

Fig. 4 is a cross-sectional view taken on line 4-4 in Fig. 2;

Fig. 5 is an exploded perspective view of the power seat slide apparatus according to a first embodiment of the present invention;

Fig. 6 is a partially enlarged view of a cut-and-bent-away portion of the upper rail according to the first embodiment of the present invention;

Fig. 7 is a partially enlarged, view of a modified example of a cut-and-bent-away portion of the upper rail according to the first embodiment of the present invention;

Fig. 8 is a partially enlarged view of a cut-and-bent-away portion of the upper rail according to a second embodiment of the present invention; and

Fig. 9 is an exploded perspective view of a power seat slide apparatus according to the second embodiment of the present invention.

### DETAILED DESCRIPTION

Embodiments of the present invention will be explained with reference to illustrations of drawing figures as follows.

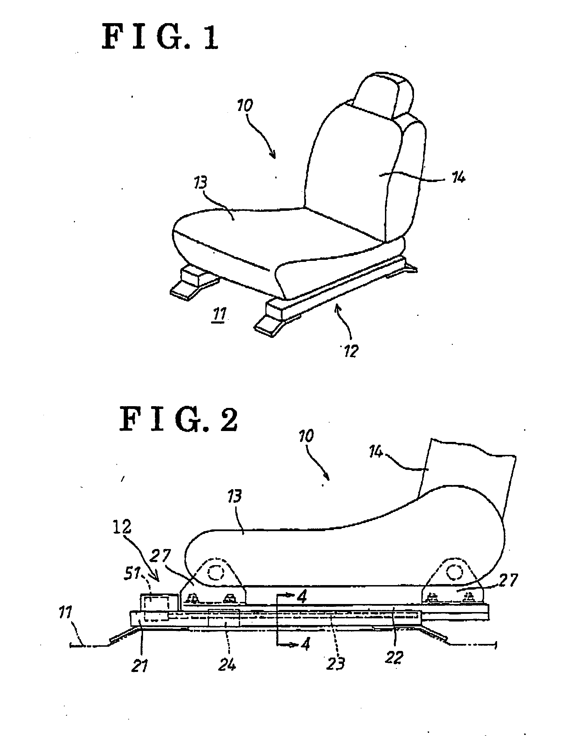

According to the embodiments of the present invention, directions, such as right, left, front, rear, upward and downward, or the like, correspond to orientations of an occupant seating on a seat for a vehicle. As shown in Fig. 1, a seat 10 for a vehicle is mounted on a vehicle floor 11. The seat 10 for the vehicle includes a power seat slide apparatus 12. The seat 10 for the vehicle includes a seat cushion 13 forming a seat surface and a seatback 14 forming a seatback surface. The seatback 14 is attached to a rear portion of the seat cushion 13 to be rotatable relative to the seat cushion 13 in a front-rear direction of the vehicle and to be fixedly retained at predetermined adjustable angular positions.

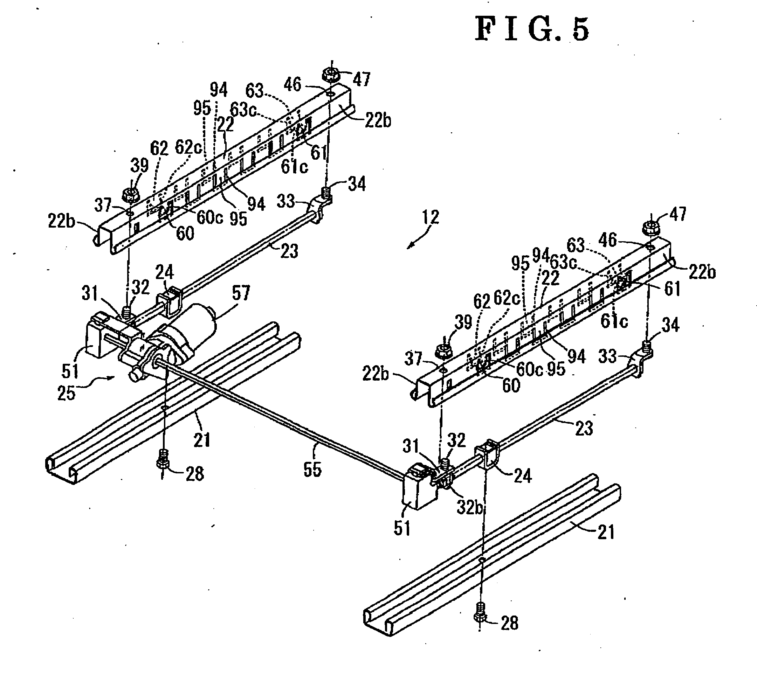

As shown in Figs. 2 and 5, the power seat slide apparatus 12 includes a lower rail 21, an upper rail 22, a lead screw member 23, a lead screw nut member 24, and a drive unit 25.

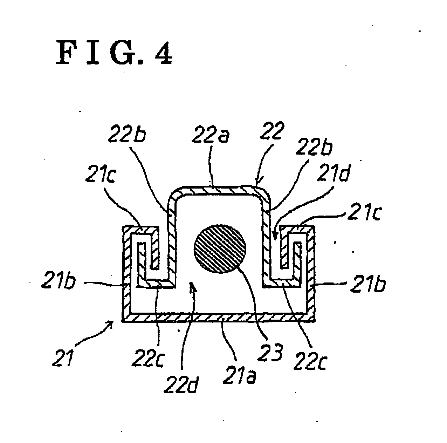

As shown in Fig. 5, the lower rails 21, 21 correspond to a pair of rail members extended longitudinally in the front-rear direction of the vehicle and arranged in parallel to each other. One of the lower rails 21 is positioned at the right side of the seat 10 and the other lower rail 21 is positioned at the left side of the seat 10. Each of the lower rail 21, as shown in Fig. 4, includes a bottom wall 21a, a pair of walls 21b, 21b which extend upward from right and left end portions of the bottom wall 21a, respectively, and flange walls 21c formed by bending a top end of each of the walls 21 b inwardly and by further bending the top end downwardly. The lower rail 21 is configured to have approximately a U-shaped cross-section having an opening portion 21d opening upward between the flange walls 21c, 21c. The lower rail 21 is fixedly provided on the vehicle floor 11. The lower rail 21 is fixed on the vehicle floor 11 by means of a fastening member, for example, a bolt at the front and rear portions thereof.

The upper rails 22, 22 as shown in Fig. 5, correspond to a pair of rail members extended longitudinally in the front-rear direction of the vehicle and arranged in parallel to each other. One of the upper rail 22 is positioned at the right side of the seat 10 and the other upper rail 22 is positioned at the left side of the seat 10. As shown in Fig. 4, the upper rail 22 includes a top wall 22a, a pair of walls 22b, 22b which extend downward from right and left end portions of the top wall 22a, respectively, and flange walls 22c, 22c formed by bending a bottom end of each of the walls 22b outwardly and by further bending the bottom end upwardly. Each of the upper rail 22 is configured to have approximately inversed U-shaped cross-section having an opening portion 22d opening downward between the flange walls 22c, 22c. As shown in Fig. 5, plural bending slots 94 having a predetermined slot width and configured in approximately U-shape are formed on each of the walls 22b, 22b so as to face predetermined positions, respectively. In those circumstances, the predetermined positions are defined as positions which are determined by stroke end positions of the seat which are particular to a type of vehicle on which the seat is assembled. The number of bending slots 94 differs depending on the number of types of vehicles to which the seat is provided. Plural tongue portions 95 are formed within the bending slots 94. The tongue portions 95 positioned so as to correspond to the stroke ends of the seat for a particular type of vehicle are bent by a predetermined angle towards the opening portion 22d of the upper rail 22 after assembling the seat 10 to the vehicle to form cut-and-bent-away portions 60, 61, 62, 63, which are cut and bent away from the walls 22b, 22b. The cut-and-bent-away portions 60, 61, 62, 63 serve as stopper portions for restricting a stroke (a distance between the cut-and-bent-away portions provided at the front portion and the rear portion of the upper rail 22) of the seat. When the upper rail 22 moves rearward, that is, when the seat moves rearward, the cut-and-bent-away portions 60, 62 each provided at front portions of the walls 22b, 22b, respectively, come in contact with the lead screw nut member 24 to restrict the stroke of the seat. Further, when the upper rail 22 moves forward, the cut-and-bent-away portions 61, 63 each provided at rear portions of the walls 22b, 22b, respectively come in contact with the lead screw nut member 24 to restrict the stroke of the seat. According to the embodiments explained above, cut-and-bent-away portions 60, 61, 62, 63 are formed after assembling the seat 10 to the vehicle, however, the cut-and-bent-away portions 60, 61, 62, 63 may be formed before assembling the seat 10 to the vehicle in accordance with the type of vehicle.

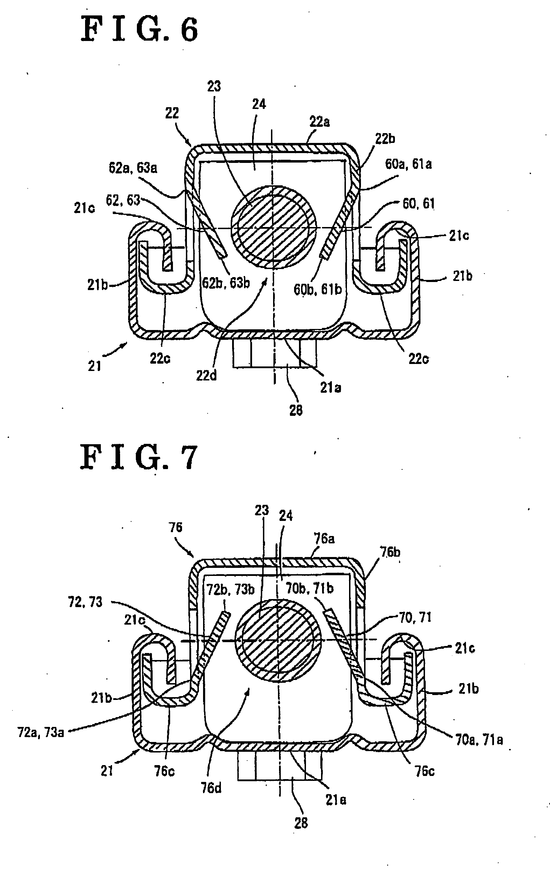

Detailed structure of the cut-and-bent-away portions 60, 61, 62, 63 will be explained hereinbelow. As shown in Fig. 6, the cut-and-bent-away portions 60, 61, 62, 63 are formed by bending corresponding bending portions 60a, 61a, 62a, 63a, respectively, by a predetermined angle towards the inside of the opening portion 22d opening downward of the upper rail 22. The bending portions 60a, 61a, 62a, 63a serve as bases of the corresponding tongue portions 95 at which a cross-sectional dimension changes from a cross-sectional dimension of an adjacent portion of the upper rail 22. End portions 60b, 61b, 62b, 63b of the cut-and-bent-away portions 60, 61, 62, 63 are positioned lower than a reference horizontal surface which crosses a center of a rotational shaft of the lead screw member 23. On the other hand, the bending portions 60a, 61a, 62a, 63a serving as supporting points for bending the tongue portions 95 are positioned higher than the reference horizontal surface which crosses the center of the rotational shaft of the lead screw member 23. The upper rail 22 is slidably supported by the lower rail 21 via rollers. In those circumstances, the bending portions 60a, 61a, 62, 63a of the respective cut-and-bent-away portions 60, 61, 62, 63 are positioned higher than the top ends of the flange walls 21c, 21c positioned at the right and left sides of the lower rail 21. The seat cushion 13 for the vehicle seat 10 is fixed on the upper rail 22 via a retaining bracket 27 (see Fig. 2).

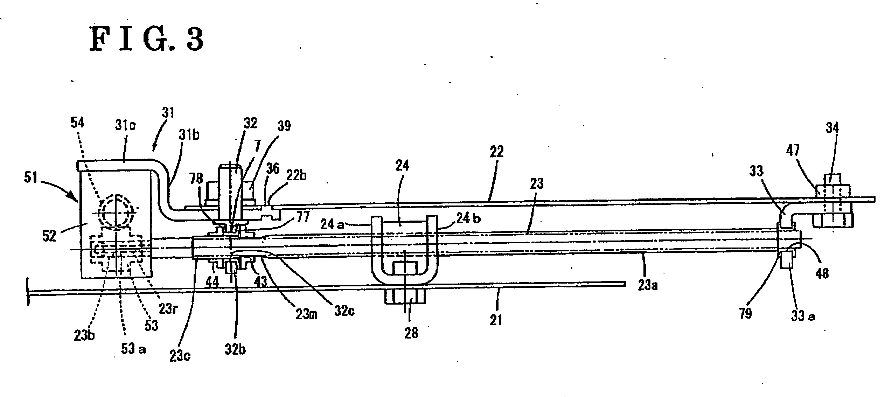

The lead screw member 23 is positioned between the lower rail 21 and the upper rail 22 which are provided on the right and left sides so that an axial center of the lead screw member 23 extends in the front-rear direction of the vehicle. As shown in Figs. 3 and 5, the lead screw nut member 24, which is fixed to the bottom surface 21a of the lower rail 21 by means of a bolt 28, is threadedly engaged onto the lead screw member 23. Front and rear portions of the lead screw member 23 are supported by the upper rail 22 so as to rotate. In other words, the lead screw member 23 is configured to rotate, however, is configured not to move in an axial directions relative to the upper rail 22. Upon the rotation of the lead screw member 23 by the lead screw nut member 24, the upper rail 22 slides on the lower rail 21 in the front-rear directions together with the lead screw member 23. In those circumstances, the lead screw nut member 24 is positioned between the cut-and-bent-away portions 60, 62 and the cut-and-bent-away portions 61, 63 in the front-rear directions of the vehicle. When the upper rail 22 slides in a rearward direction on the lower rail 21, a front surface 24a of the lead screw nut member 24 which is fixed to the lower rail 21 comes in contact with rear side lateral surface portions 60c, 62c of the cut-and-bent-away portions 60, 62, respectively, to restrict the stroke of the upper rail 22 in the backward direction. Likewise, when the upper rail 22 slides in a forward direction on the lower rail 21, a rear surface 24b of the lead screw nut member 24 comes in contact with front side lateral surface portions 61c, 63c of the cut-and-bent-away portions 61, 63, respectively, to restrict the stroke of the upper rail 22 in the forward direction.

Hereinafter, a support structure of the lead screw member 23 relative to the upper rail 22 and a particular structure of the drive unit 25 will be explained. As shown in Figs. 3 and 5, a front end retaining bracket 31 is fastened to a front end portion of the upper rail 22 by means of a bolt 32 and a nut 39. A rear end retaining bracket 33 is fastened to a rear end portion of the upper rail 22 by means of a bolt 34 and a nut 47.

The front end retaining bracket 31 shaped in a plate form includes a positioning projection 36 at a rear end portion thereof as shown in Fig. 3. In a state where the positioning projection 36 is fitted into a positioning hole 22b formed on the upper rail 22, the front end retaining bracket 31 is fixed to the upper rail 22 for positioning.

As shown in Fig. 3, a supporting portion 32b is provided at the bolt 32 to project downward. A supporting hole 32c whose diameter is slightly larger than that of the lead screw member 23 is formed on the supporting portion 32b. The lead screw member 23 is penetratingly positioned in the supporting hole 32c via a bearing member 7. Bearing nuts 43, 44 are provided at the both sides of the supporting portion 32b, respectively, in an axial direction of the lead screw member 23. The first bearing nut 43 is threadedly engaged with an incomplete thread screw portion 23m, or no-thread portion of the lead screw member 23 to be fixed. The second bearing nut member 44 is threadedly engaged with a reverse thread screw portion 23c of the lead screw member 23 to be fastened. The bearing member 7 includes a bushing 77 and a plane washer 78 which are made from a metal member or a resin member which is highly slidable. With the foregoing construction, the lead screw member 23 and the first and second bearing nuts 43, 44 which are fixed to the lead screw member 23 are supported by the front end retaining bracket 31 via the bearing member 7 in a radial direction and a thrust direction so as to rotate and not to displace in an axial direction of the lead screw member 23.

As shown in Fig. 3, the rear end retaining bracket 33 bent to have an L-shaped configuration in cross-section is integrally attached to the upper rail 22 by means of the bolt 34 and the nut 47. A penetration hole 48 to which the lead screw member 23 is inserted is formed on a perpendicular portion 33a of the rear end retaining bracket 33. A bushing 79 having a recessed configuration in cross-section is provided at the penetration hole 48. A rear end shaft portion of the lead screw member 23 is rotatably supported by the bushing 79. Accordingly, the rotation of the lead screw member 23 which is threadedly engaged with the lead screw nut member 24 is supported by two points, that is, each of the bushings 77, 79 are arranged at the front portion and the rear portion of the lead screw member 23, respectively.

A front end portion of the front end retaining bracket 31 is bent upward approximately in a perpendicular direction at the end portion of the upper rail 22, and an end (top end) of a bent portion 31b is further bent forward and orthogonally in approximately a horizontal direction to form a horizontal retaining portion 31c which extends in an approximately horizontal direction. A gear box 51 is fixed to a bottom surface of the horizontal retaining portion 31c by means of a fastening member, for example, a bolt. The gear box 51 includes a housing 52. As shown in Fig. 3, a worm wheel 53, serving as an output rotation member, is supported by the housing 52 so as to rotate about an axial line common to the lead screw member 23. A spline hole 53a is formed at a rotational center portion of the worm wheel 53, and a spline engagement portion 23r formed on a front end portion of the lead screw member 23 is spline-engaged with the spline hole 53a. A worm shaft 54 having a worm which is geared with the worm wheel 53 is supported by the housing 52 so as to rotate about an axial line which is orthogonal to an axial line of the worm wheel 53, that is, to rotate about a horizontal axial line which is orthogonal to a front-rear direction of the vehicle. The worm wheel 53 and the worm shaft 54 configure a reduction gear mechanism.

As shown in Fig. 5, a rotation transmitting shaft 55 which extends in a right and left direction of the vehicle is arranged between the gear boxes 51, 51 provided at the front end retaining brackets 31, 31 on the right and left sides, respectively. A first end of the rotation transmitting shaft 55 is connected to the worm shaft 54 supported by the gear box 51 on the left side and a second end of the rotation transmitting shaft 55 is connected to the worm shaft 54 supported by the gear box 51 on the right side. An output shaft of a motor 57 mounted on one of the gear boxes 51, 51 is rotationally connected to the rotation transmitting shaft 55 via a gear mechanism. Thus, the rotation of the motor 57 is transmitted to the worm shafts 54, 54 provided on the right and left sides via the rotation transmitting shaft 55.

The motor 57, the rotation transmitting shaft 55, and the reduction gear mechanism including worm wheel 53 and the worm shaft 54 configure the drive unit 25.

An operation of the power seat slide apparatus 12 according to the embodiment will be explained hereinbelow. When moving the vehicle seat 10 in the front-rear direction for adjustment, for example, the motor 57 is activated in a normal direction or a reverse direction by operating a switch arranged in the vicinity of the vehicle seat 10 either for moving the vehicle seat 10 forward or for moving the vehicle seat 10 rearward. Accordingly, the rotation transmitting shaft 55 is driven to rotate in the normal direction or in the reverse direction, and the rotation of the rotation transmitting shaft 55 is transmitted to the worm shafts 54, 54 connected to the both ends of the rotation transmitting shaft 55, respectively, in the gear box 51. According to the foregoing construction, the worm wheel 53 serving as the output rotation member is rotated in response to the rotation of the worm shaft 54 and the rotation of the worm wheel 53 is transmitted to the lead screw member 23 via the spline engagement portion 23b. In consequence, the lead screw member 23 is rotated at reduced speed by the rotation of the rotation transmitting shaft 55 by the motor 57 via the reduction gear mechanism including the worm shaft 54 and the worm wheel 53.

Because the lead screw nut member 24 which is fixed to the lower rail 21 is threadedly engaged with the lead screw member 23, the lead screw member 23 moves in the axial direction relative to the lead screw nut member 24 while rotating. Thus, the upper rail 22 moves either forward or rearward via the front end retaining bracket 31 and the rear end retaining bracket 33 which rotatably support the lead screw member 23 to adjust the position of the vehicle seat 10.

In a case where the switch for moving the vehicle seat 10 forward or for moving the vehicle seat 10 backward is continuingly operated, the lead screw member 23 continuously rotates so that the upper rail 22 continuously moves in the forward direction or the rearward direction relative to the lower rail 21. In those circumstances, the cut-and-bent-away portions 60, 62, 61, 63 formed on each of the walls 22b, 22b of the upper rail 22 which function as a pair on the right side and left side by bending the corresponding tongue portions by a predetermined angle towards the inside of the opening portion 22d which opens downward of the upper rail 22. In consequence, the rear surface 24b of the lead screw nut member 24 fixed to the lower rail 21 and the lateral surfaces 61c, 63c of the cut-and-bent-away portions 61, 63 contact each other when the upper rail 22 moves in the forward direction to restrict the stroke. Further, the front surface 24a of the lead screw nut member 24 and the lateral surfaces 60c, 62c of the cut-and-bent-away portions 60, 62 contact each other when the upper rail 22 moves in the rearward direction to restrict the stroke.

With the construction of the power seat slide apparatus 12 of the embodiment, the stroke of the upper rail is restricted by machining the upper rail 22 to form the bending slots 94 and by bending the corresponding tongue portions to form the cut-and-bent-away portions 60, 61, 62, 63, whereas additional separate parts serving as stoppers are required to be provided at the lead screw member in the known conventional apparatuses. Thus, the manufacturing cost is reduced according to the power seat slide apparatus 12 of the embodiment.

Further, according to the first embodiment, the bending portions 60a, 61a, 62a, 63a of the cut-and-bent-away portions 60, 61, 62, 63 of the upper rail 22 are positioned at a higher level than the top ends of the flange walls 21c, 21c of the lower rails 21, 21 provided at the right and left sides as a pair. Accordingly, a workspace for forming each of the cut-and-bent-away portions 60, 61, 62, 63 after assembling the vehicle seat 10 is ensured. Thus, in case of assembling the vehicle seat 10 to various types of vehicles, the plural bending slots 94 are provided on the walls 22b, 22b of the upper rail 22 in advance, and the cut-and-bent-away portions 60, 61, 62, 63 positioned appropriate for a particular type of the vehicle are formed by bending the corresponding tongue portions after assembling the vehicle seat 10. In consequence, parts of the upper rail 22 for various types of vehicles are standardized to reduce manufacturing costs.

According to the first embodiment, the positions of the cut-and-bent-away portions 60, 61, 62, 63 are determined so that the end portions 60b, 61b, 62b, 63b are arranged to be at the lower level than the horizontal surface which crosses the rotational axis of the lead screw member 23 and the bending portions 60a, 61a, 62a, 63a are arranged to be at the higher level than the horizontal surface which crosses the rotational axis of the lead screw member 23. Thus, because each of the cut-and-bent-away portions 60, 61, 62, 63 extends to overlap the rotational center of the lead screw member 23, in a case where each of lateral surfaces 60c, 61c, 62c, 63c of the cut-and-bent-away portions 60, 61, 62, 63 comes in contact with either the front surface 24a or the rear surface 24b of the lead screw nut member 24, the cut-and-bent-away portions 60, 61, 62, 63 receive the load of the lead screw member 23 without inclining. In other words, the load applied to the cut-and-bent-away portions 60, 61, 62, 63 via the lead screw member 23 is effectively received with less force. Accordingly, a considerable level of load by the motor rotation is stably received, the lead screw member 23 stops safely without damages due to the flexural load, or the like, thereby improving reliability.

According to the first embodiment, the plural bending slots 94 having a predetermined width and formed in approximately U-shape are formed on the pair of walls 22b, 22b of the upper rail 22 so as to face each other. However, the configuration of the bending slots 94 is not limited. For example, the bending slots 94 are formed approximately in an inverted U-shape. In those circumstance, for example as shown in Fig. 7, each of cut-and-bent-away portions 70, 71, 72, 73 formed by each of bending slots is bent by a predetermined angle towards an inside of an opening portion 76d which opens downward of an upper rail 76 at bending portions 70a, 71a, 72a, 73a. The bending portions 70a, 71a, 72a, 73a serve as bases of the corresponding tongue portion 95 at which a cross-sectional dimension changes from a cross-sectional dimension of an adjacent portion of the upper rail 22. In consequence, each of the end portions 70b, 71b, 72b, 73b of each of the cut-and-bent-away portions 70, 71, 72, 73 of the upper rail 76 is arranged at the higher level than the top ends of respective flange walls 21c, 21c of the lower rail 21. Further, the end portions 70b, 71b, 72b, 73b of each of the cut-and-bent-away portions 70, 71, 72, 73 are positioned higher than a reference horizontal surface which crosses a center of the rotational shaft of the lead screw member 23. On the other hand, bending portions 70a, 71a, 72a, 73a are positioned higher than the reference horizontal surface which crosses the center of the rotational shaft of the lead screw member 23. According to this construction, the advantages similar to the first embodiment can be attained.

Further, the configuration of the bending slots formed on the walls 22b of the upper rail 22 is not necessarily to be symmetrically arranged. In other words, the configuration of the bending slots at the right side and the configuration of the bending slots at the left side may differ from each other. For example, the bending slots at one side may be configured in an approximately U-shape and the bending slots at the other side may be configured in an approximately inverted U-shape. In those circumstances, the configuration and the arrangements of the bending slots shaped in the approximately U-shape and the approximately inverted U-shape is similar to the cut-and-bent-away portions 60, 70 in Figs. 6 and 7, and similar advantages and the effects can be attained.

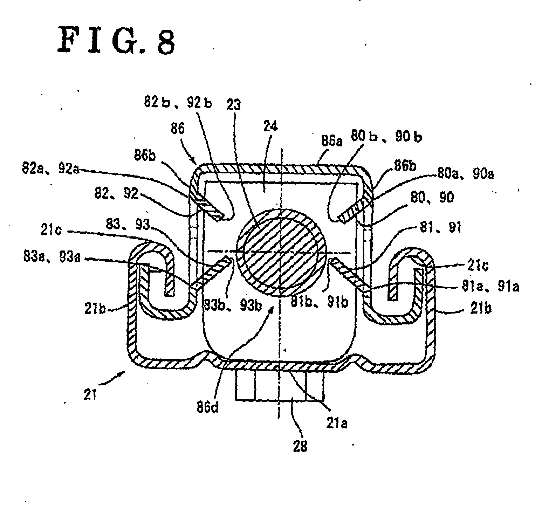

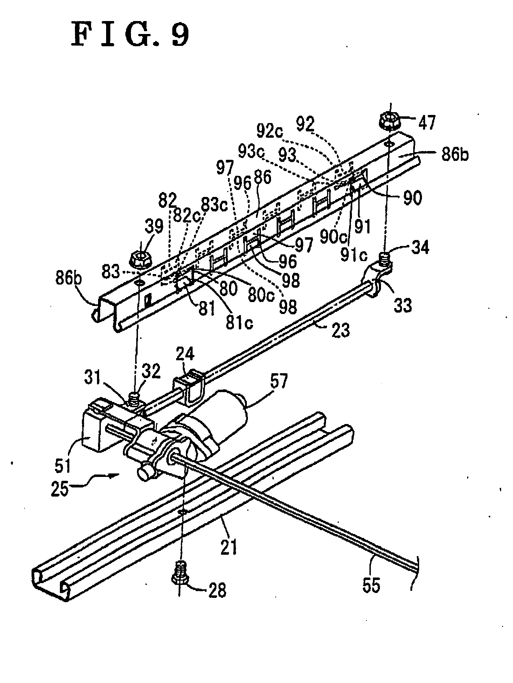

A second embodiment will be explained with reference to Figs. 8 and 9 as follows According to the construction of the second embodiment, each of the cut-and-bent-away portions formed on corresponding walls 86b, 86b includes an upper flap portion and a lower flap portion which are provided at an upper portion and a lower portion of each of the walls 86b, 86b formed on the right side and the left side. The differences of the second embodiment from the first embodiment will be explained hereinafter. Other constructions of the second embodiment are common to the constructions of the first embodiment. The same reference numeral is provided for the common constructions to the first embodiment and the explanations thereof will not be repeated.

According to the second embodiment, end portions 80b, 81b, 82b, 83b, 90b, 91b, 92b, 93b of respective cut-and-bent-away portions 80, 81, 82, 83, 90, 91, 92, 93 prior to being bent are arranged to be at a higher level than the top portions of the flange walls 21c, 21c provided at the right side and the left side of the lower rail 21, respectively. Thus, work spaces for forming cut-and-bent-away portions 80, 81, 82, 83, 90, 91, 92, 93 are ensured even after the vehicle seat 10 is assembled. In a case where the power seat slide apparatus 12 is applied to various types of vehicles, plural bending slots 96 formed in approximately H-shape having a predetermined groove width are formed on the walls 86b, 86b of an upper rail 86 and tongue portions 97, 98 which are positioned so as to be compatible to a particular vehicle type are bent after assembling the vehicle seat 10. According to the foregoing construction, parts of the upper rail 86 are standardized, thus reducing the manufacturing cost. Similar to the first embodiment, each of the cut-and-bent-away portions 80, 81, 82, 83, 90, 91, 92, 93 may be bent in advance prior to the assembling of the vehicle seat 10.

After the cut-and-bent-away portions 80, 81, 82, 83, 90, 91, 92, 93 are bent, the end portions 80b, 82b, 90b, 92b are positioned higher than the reference horizontal surface which crosses the center of the rotational shaft of the lead screw member 23. On the other hand, the end portions 81b, 83b, 91b, 93b are positioned lower than the reference horizontal surface which crosses the center of the rotational shaft of the lead screw member 23 after the cut-and-bent-away portions 80, 81, 82, 83, 90, 91, 92, 93 are bent. According to the foregoing construction, in a case where lateral surfaces 80c, 81c, 82c, 83c, 90c, 91c, 92c, 93c of respective cut-and-bent-away portions 80, 81, 82, 83, 90, 91, 92, 93 come in contact with either the front surface 24a or the rear surface 24b of the lead screw nut member 24, the load of the rotational shaft of the lead screw member 23 is received in a well balanced manner without inclining. In other words, the load applied to the cut-and-bent-away portions 80, 81, 82, 83, 90, 91, 92, 93 via the lead screw member 23 is effectively received with less force. Accordingly, a considerable level of load by the motor rotation is stably received to safely stop the lead screw member 23, thereby improving the reliability.

According to the embodiments of the present invention, the lead screw member 23 is engaged with the worm wheel 53 housed in the gear body 51 by means of a spline. However, the output rotation member which is engaged with the lead screw shaft 23 by means of the spline is not limited to a worm or a worm wheel mechanism as long as an output of the motor 57 is rotationally transmitted to the lead screw member 23.

## Claims

1. A power seat slide apparatus (12), comprising:
a lower rail (21) adapted to be provided at a vehicle floor (11);
an upper rail (22, 76, 86) slidably supported by the lower rail (21) for retaining a vehicle seat (10), the upper rail (22, 76, 86) having a pair of walls (22b, 76b, 86b) formed on right and left sides thereof;
a lead screw member (23) rotatably supported by the upper rail (22, 76, 86) and extending in a sliding direction of the upper rail (22, 76, 86);
a lead screw nut member (24) provided at the lower rail (21) and threadedly engaged with the lead screw member (23);
an output rotation member (53) provided at the upper rail (22, 76, 86) and rotationally connected to the lead screw member (23);
a gearbox (51) rotatably supporting the output rotation member (53);
a drive unit (25) transmitting a rotational drive force to the lead screw member (23) via the output rotation member (53) supported by the gearbox (51); **characterised in that** a pair of cut-and-bent-away portions (60, 61, 62, 63, 70, 71, 72, 73, 80, 81, 82, 83, 90, 91, 92, 93) are provided, each cut-and-bent-away portion is formed on each of the walls (22b, 76b,
86b) of the upper rail (22, 76, 86) and is arranged at positions to face the lead screw nut member (24) and to contact the lead screw nut member (24) at stroke ends of the upper rail (22, 76, 86) in a front-rear direction thereof.

2. The power seat slide apparatus (12) according to claim 1, wherein the lower rail (21) includes a pair of walls (21b) formed on right and left sides thereof, each of the cut-and-bent-away portions (60, 61, 62, 63, 70, 71, 72, 73, 80, 81, 82, 83, 90, 91, 92, 93) includes an end portion (60b, 61b, 62b, 63b, 70b, 71b, 72b, 73b, 80b, 81b, 82b, 83b, 90b, 91b, 92b, 93b) and a bending portion (60a, 61a, 62a, 63a, 70a, 71a, 72a, 73a, 80a, 81a, 82a, 83a, 90a, 91a, 92a, 93a) where the cut-and-bent-away portion (60, 61, 62, 63, 70, 71, 72, 73, 80, 81, 82, 83, 90, 91, 92, 93) is bent; and wherein the bending portion (60a, 61a, 62a, 63a, 80a, 82a, 90a, 92a) is positioned at a higher level than a top end (21c) of the wall (21b) of the lower rail (21) in a state where the upper rail (22, 76, 86) and the lower rail (21) are engaged.

3. The power seat slide apparatus according to claim 2, wherein one of the end portion (60b, 61b; 62b, 63b, 70b, 71b, 72b, 73b, 80b, 81b, 82b, 83b, 90b, 91b, 92b, 93b) and the bending portion (60a, 61a, 62a, 63a, 70a, 71a, 72a, 73a, 80a, 81a, 82a, 83a, 90a, 91a, 92a, 93a) of each of the cut-and-bent-away portions (60, 61, 62, 63, 70, 71, 72, 73, 80, 81, 82, 83, 90, 91, 92, 93) is arranged at positions higher than a reference horizontal surface which crosses a center of a rotational shaft of the lead screw member (23), and the other of the end portion (60b, 61b, 62b, 63b, 70b, 71b, 72b, 73b, 80b, 81b, 82b, 83b, 90b, 91b, 92b, 93b) and the bending portion (60a, 61a, 62a, 63a, 70a, 71a, 72a, 73a, 80a, 81a, 82a, 83a, 90a, 91a, 92a, 93a) of each of the cut-and-bent-away portions (60, 61, 62, 63, 70, 71, 72, 73, 80, 81, 82, 83, 90, 91, 92, 93) is arranged at positions lower than the reference horizontal surface which crosses the center of the rotational shaft of the lead screw member (23).

4. The power seat slide apparatus (12) according to 2 or 3, wherein the end portion (70b, 71b, 72b, 73b) of the each of the cut-and-bent-away portions (70, 71, 72, 73) is positioned higher than the top end (21c) of the wall (21b) of the lower rail (21) in a state where the upper rail (76) and the lower rail (21) are engaged; and wherein the bending portion (70a, 71a, 72a, 73a) is positioned lower than the reference horizontal surface which crosses the center of the rotational shaft of the lead screw member (23).

5. The power seat slide apparatus (12) according to 2 or 3, wherein the bending portion (60a, 61a, 62a, 63a) of each of the cut-and-bent-away portions (60, 61, 62, 63) is positioned higher than the top end (21 c) of the wall (21b) of the lower rail (21) in a state where the upper rail (22) and the lower rail (21) are engaged; and wherein the end portion (60b, 61b, 62b, 63b) is positioned lower than the reference horizontal surface which crosses the center of the rotational shaft of the lead screw member (23).

6. The power seat slide apparatus (12) according to any one of claims 2 to 5, wherein each of the walls (22b, 76b) of the upper rail (22, 76) includes a bending slot (94) formed either approximately in a U-shape or approximately in an inversed U-shape and a tongue portion (95) formed within the bending slot (94); and wherein
the bending portion (60a, 61a, 62a, 63a, 70a, 71a, 72a, 73a) is formed by bending the tongue portion (95) towards an inside of an opening portion (22d, 76d) opening downward of the upper rail (22, 76).

7. The power seat slide apparatus (12) according to either one of claims 1 or 2, wherein said pair of cut-and-bent-away portions (60, 61, 62, 63, 70, 71, 72, 73, 80, 81, 82, 83, 90, 91, 92, 93) include first and second pairs of cut-and-bent-away portions (80, 81, 82, 83, 90, 91, 92, 93) provided at an upper portion and a lower portion of the walls of the upper rail (86), respectively.

8. The power seat slide apparatus (12) according to claim 7 and claim 2, the bending portions (80a, 81a, 82a, 83a, 90a, 91a, 92a, 93a) of the cut-and-bent-away portions (80, 81, 82, 83, 90, 91, 92, 93) provided at the upper portion and the lower portion of each of the walls (86b) of the upper rail (86) are positioned at the higher level and the lower level relative to a reference horizontal surface which crosses a center of a rotational shaft of the lead screw member (23), respectively.

9. The power seat slide apparatus (12) according to either one of claims 7 or 8, the end portions (80b, 81b, 82b, 83b, 90b, 91b, 92b, 93b) of the cut-and-bent-away portions (80, 81, 82, 83, 90, 91, 92, 93) provided at the upper portion and the lower portion of each of the walls (86b) of the upper rail (86) are positioned at the higher level and the lower level relative to a reference horizontal surface which crosses a center of a rotational shaft of the lead screw member (23), respectively.

10. The power seat slide apparatus (12) according to any one of claims 7 to 9, further comprising:
a bending slot (96) formed in an approximately H shape and formed on each of the walls (86b) of the upper rail (86); and
a tongue portion (98) formed within the bending slot (96); wherein
the bending portion (80a, 81a, 82a, 83a, 90a, 91a, 92a, 93a) is formed by bending the tongue portion (98) towards an inside of an opening portion (86d) opening downward of the upper rail (86).

## Patentansprüche

1. Kraftbetriebene Sitzverschiebevorrichtung (12) mit:
einer unteren Schiene (21), die angepasst ist, um an einem Fahrzeugboden (11) vorgesehen zu werden;
einer oberen Schiene (22, 76, 86), die durch die untere Schiene (21) zum Halten eines Fahrzeugssitzes (10) verschiebbar gelagert ist, wobei die obere Schiene (22, 76, 86) ein Paar Wände (22b, 76b, 86b) hat, die an deren linker und rechter Seite ausgebildet sind;
einem Leitspindelelement (23), das durch die obere Schiene (22, 76, 86) drehbar gelagert ist und sich in eine Verschieberichtung der oberen Schiene (22, 76, 86) erstreckt;
einem Leitspindelmotorelement (24), das an der oberen Schiene (21) vorgesehen ist und mit dem Leitspindelelement (23) in Gewindeeingriff ist;
einem Ausgangsdrehelement (53) das an der oberen Schiene (22, 76, 86) vorgesehen ist und mit dem Leitspindelelement (23) drehbar verbunden ist;
einem Getriebekasten (51), der das Ausgangsdrehelement (53) drehbar lagert;
einer Antriebseinheit (25), die eine Drehantriebskraft auf das Leitspindelelement (23) über das Ausgangsdrehelement (53) überträgt, das durch den Getriebekasten (51) gelagert ist;
**dadurch gekennzeichnet, dass**
ein Paar eingeschnittener und weggebogener Abschnitte (60, 61, 62, 63, 70, 71, 72, 73, 80, 81, 82, 83, 90, 91, 92, 93) vorgesehen ist und jeder eingeschnittene und weggebogene Abschnitt an jeder der Wände (22b, 76b, 86b) der oberen Schiene (22, 76, 86) ausgebildet ist und an Positionen angeordnet ist, um dem Leitspindelmutterelement (24) zugewandt zu sein und das Leitspindelmutterelement (24) an Bewegungsenden der oberen Schiene (22, 76, 86) in deren Vorwärtsrückwärtsrichtung zu kontaktieren.

2. Kraftbetriebene Sitzverschiebevorrichtung (12) nach Anspruch 1, wobei die untere Schiene (21) ein Paar Wände (21b) hat, die an deren rechter und linker Seite angeordnet sind, wobei jeder der eingeschnittenen und weggebogenen Abschnitte (60, 61, 62, 63, 70, 71, 72, 73, 80, 81, 82, 83, 90, 91, 92, 93) einen Endabschnitt (60b, 61b, 62b, 63b, 70b, 71b, 72b, 73b, 80b, 81b, 82b, 83b, 90b, 91b, 92b, 93b) und einen gebogenen Abschnitt (60a, 61a, 62a, 63a, 70a, 71a, 72a, 73a, 80a, 81a, 82a, 83a, 90a, 91a, 92a, 93a) aufweist, an dem der eingeschnittene und weggebogene Abschnitt (60, 61, 62, 63, 70, 71, 72, 73, 80, 81, 82, 83, 90, 91, 92, 93) gebogen ist; und wobei der gebogene Abschnitt (60a, 61a, 62a, 63a, 80a, 82a, 90a, 92a) auf einem höheren Niveau als ein oberes Ende (21c) der Wand (21b) der unteren Schiene (21) in einem Zustand positioniert ist, in dem die obere Schiene (22, 76, 86) und die untere Schiene (21) in Eingriff sind.

3. Kraftbetriebene Sitzverschiebevorrichtung nach Anspruch 2, wobei einer von dem Endabschnitt (60b, 61b, 62b, 63b, 70b, 71b, 72b, 73b, 80b, 81b, 82b, 83b, 90b, 91b, 92b, 93b) und dem gebogenen Abschnitt (60a, 61a, 62a, 63a, 70a, 71a, 72a, 73a, 80a, 81a, 82a, 83a, 90a, 91a, 92a, 93a) von jedem von dem eingeschnittenen und weggebogenen Abschnitt (60, 61, 62, 63, 70, 71, 72, 73, 80, 81, 82, 83, 90, 91, 92, 93) an einer höheren Position als einer Bezugshorizontalfläche angeordnet ist, die eine Mitte einer Drehwelle des Leitspindelelements (23) schneidet, und der andere von dem Endabschnitt (60b, 61b, 62b, 63b, 70b, 71b, 72b, 73b, 80b, 81b, 82b, 83b, 90b, 91b, 92b, 93b) und dem gebogenen Abschnitt (60a, 61a, 62a, 63a, 70a, 71a, 72a, 73a, 80a, 81a, 82a, 83a, 90a, 91a, 92a, 93a) von jedem der eingeschnittenen und weggebogenen Abschnitte (60, 61, 62, 63, 70, 71, 72, 73, 80, 81, 82, 83, 90, 91, 92, 93) an niedrigeren Positionen als die Bezugshorizontalfläche angeordnet ist, die die Mitte der Drehwelle des Leitspindelelements (23) schneidet.

4. Kraftbetriebene Sitzverschiebevorrichtung (12) nach Anspruch 2 oder 3, wobei der Endabschnitt (70b, 71b, 72b, 73b) von jedem der eingeschnittenen und weggebogenen Abschnitte, (70, 71, 72, 73) höher als das obere Ende (21c) der Wand (21b) der unteren Schiene (21) in einem Zustand positioniert ist, in dem die obere Schiene (76) und die untere Schiene (71) in Eingriff sind; und wobei der gebogene Abschnitt (70a, 71a, 72a, 73a) niedriger als die Bezugshorizontalfläche positioniert ist, die die Mitte der Drehwelle des Führungsschraubenelements (23) schneidet.

5. Kraftbetriebene Sitzverschiebevorrichtung (12) nach Anspruch 2 oder 3, wobei der gebogene Abschnitt (60a, 61a, 62a, 63a) von jedem der eingeschnittenen und weggebogenen Abschnitte (60, 61, 62, 63) höher als das obere Ende (21c) der Wand (21b) der unteren Schiene (21) in einem Zustand positioniert ist, in dem die obere Schiene (22) und die untere Schiene (21) in Eingriff sind; und wobei der Endabschnitt (60b, 61b, 62b, 63b) niedriger als die Bezugshorizontalfläche positioniert ist, die die Mitte der Drehwelle des Leitspindelelements (23) schneidet.

6. Kraftbetriebene Sitzsverschiebevorrichtung (12) nach einem der Ansprüche 2 bis 5, wobei jede der Wände (22b, 76b) der oberen Schiene (22, 76) eine Biegeaussparung (94 ist oder annähernd in der Form eines umgekehrten Us ausgebildet ist und einen Zungenabschnitt (95) innerhalb der Biegeaussparung (94) aufweist; und wobei
der gebogene Abschnitt (60a, 61a, 62a, 63a, 70a, 71a, 72a, 73a) durch Biegen des Zungenabschnitts (95) in die Richtung zu einer Innenseite eines Öffnungsabschnitts (22d, 76d), der nach abwärts der oberen Schiene (22, 76) öffnet, ausgebildet ist.

7. Kraftbetriebene Sitzverschiebevorrichtung (12) nach einem der Ansprüche 1 oder 2, wobei das Paar eingeschnittener und weggebogener Abschnitte (60, 61, 62, 63, 70, 71, 72, 73, 80, 81, 82, 83, 90, 91, 92, 93) ein erstes und ein zweites Paar eingeschnittener und weggebogener Abschnitte (80, 81, 82, 83, 90, 91, 92, 93) aufweist, die an einem oberen Abschnitt bzw. einem unteren Abschnitt der Wände der oberen Schiene (86) vorgesehen sind.

8. Kraftbetriebene Sitzverschiebevorrichtung (12) nach Anspruch 7 und Anspruch 2, wobei die gebogenen Abschnitte (80a, 81a, 82a, 83a, 90a, 91a, 92a, 93a) der eingeschnittenen und weggebogenen Abschnitte (80, 81, 82, 83, 90, 91, 92, 93), die an dem oberen Abschnitt und an dem unteren Abschnitt von jeder der Wände (86b) der oberen Schiene (86) vorgesehen sind, bei dem höheren Niveau bzw. dem niedrigeren Niveau bezüglich einer Bezugshorizontalfläche positioniert sind, die eine Mitte einer Drehwelle des Leitspindelelements (23) schneidet.

9. Kraftbetriebene Sitzverschiebevorrichtung (12) nach einem der Ansprüche 7 oder 8, wobei die Endabschnitte (80b, 81b, 82b, 83b, 90b, 91b, 92b, 93b) der eingeschnittenen und weggebogenen Abschnitte (80, 81, 82, 83, 90, 91, 92, 93), die an dem oberen und an dem unteren Abschnitt von jeder der Wände (86b) der oberen Schiene (86) vorgesehen sind, bei dem höheren Niveau bzw. dem niedrigeren Niveau bezüglich einer Bezugshorizontalfläche positioniert sind, die eine Mitte einer Drehwelle des Leitspindelelements (23) schneidet.

10. Kraftbetriebene Sitzverschiebevorrichtung (12) nach einem der Ansprüche 7 bis 9 ferner mit:
einer Biegeaussparung (96), die annähernd in einer H-Form ausgebildet ist und an jeder der Wände (86b) der oberen Schiene (86) ausgebildet ist; und
einem Zungenabschnitt (98) der innerhalb der Biegeaussparung (96) ausgebildet ist; wobei
der gebogene Abschnitt (80a, 81a, 82a, 83a, 90a, 91a, 92a, 93a) durch Biegen des Zungenabschnitts (98) in die Richtung einer Innenseite eines Öffnungsabschnitts (86d), der abwärts der oberen Schiene (86) öffnet, ausgebildet ist.

## Revendications

1. Appareil (12) de coulissement de siège électrique, comprenant:
un rail inférieur (21) adapté pour équipé le plancher (11) d'un véhicule;
un rail supérieur (22, 76, 86) soutenu en coulissement par le rail inférieur (21) pour retenir un siège (10) du véhicule, le rail supérieur (22, 76, 86) ayant une paire de parois (22b, 76b, 86b) formées sur ses côtés droit et gauche;
un élément de vis-mère (23) soutenu en rotation par le rail supérieur (22, 76, 86) et s'étendant dans une direction de coulissement du rail supérieur (22, 76, 86);
un élément (24) d'écrou de la vis-mère pourvu au niveau du rail inférieur (21) et engagé par filetage à l'élément de vis-mère (23);
un élément (53) de rotation de sortie pourvu au niveau du rail supérieur (22, 76, 86) et relié de manière rotative à l'élément de vis-mère (23);
une boîte à engrenage (51) soutenant en rotation l'élément (53) de rotation de sortie;
une unité d'entraînement (25) transmettant une force d'entraînement en rotation à l'élément de vis-mère (23) à travers l'élément (53) de rotation de sortie soutenu par la boîte à engrenage (51);
**caractérisé en ce que**
une paire de parties découpées et pliées (60, 61, 62, 63, 70, 71, 72, 73, 80, 81, 82, 83, 90, 91, 92, 93) sont prévues, chaque partie découpée et pliée est formée sur chacune des parois (22b, 76b, 86b) du rail supérieur (22, 76, 86) et est agencée à des positions pour être en vis-à-vis de l'élément (24) d'écrou de vis-mère et pour se mettre en contact avec l'élément (24) d'écrou de vis-mère à des extrémités de course du rail supérieur (22, 76, 86) dans sa direction avant-arrière.

2. Appareil (12) de coulissement de siège électrique selon la revendication 1, dans lequel le rail inférieur (21) comporte une paire de parois (21b) formées sur ses côtés droit et gauche, chacune des parties découpées et pliées (60, 61, 62, 63, 70, 71, 72, 73, 80, 81, 82, 83, 90, 91, 92, 93) comporte une partie d'extrémité (60b, 61b, 62b, 63b, 70b, 71b, 72b, 73b, 80b, 81b, 82b, 83b, 90b, 91b, 92b, 93b) et une partie de pliage (60a, 61a, 62a, 63a, 70a, 71a, 72a, 73a, 80a, 81a, 82a, 83a, 90a, 91a, 92a, 93a) où la partie découpée et pliée (60, 61, 62, 63, 70, 71, 72, 73, 80, 81, 82, 83, 90, 91, 92, 93) est pliée, et où la partie de pliage (60a, 61a, 62a, 63a, 80a, 82a, 90a, 92a) est positionnée à un niveau plus élevé qu'une extrémité supérieure (21c) de la paroi (21b) du rail inférieur (21) dans un état où le rail supérieur (22, 76, 86) et le rail inférieur (21) sont engagés.

3. Appareil (12) de coulissement de siège électrique selon la revendication 2, dans lequel l'une de la partie d'extrémité (60b, 61b, 62b, 63b, 70b, 71b, 72b, 73b, 80b, 81b, 82b, 83b, 90b, 91b, 92b, 93b) et de la partie de pliage (60a, 61a, 62a, 63a, 70a, 71a, 72a, 73a, 80a, 81a, 82a, 83a, 90a, 91a, 92a, 93a) de chacune des parties découpées et pliées (60, 61, 62, 63, 70, 71, 72, 73, 80, 81, 82, 83, 90, 91, 92, 93) est agencée à des positions plus élevées qu'une surface horizontale de référence qui passe par un centre d'un arbre de rotation de l'élément (23) de vis-mère, et l'autre de la partie d'extrémité (60b, 61b, 62b, 63b, 70b, 71b, 72b, 73b, 80b, 81b, 82b, 83b, 90b, 91b, 92b, 93b) et de la partie de pliage (60a, 61a, 62a, 63a, 70a, 71a, 72a, 73a, 80a, 81a, 82a, 83a, 90a, 91a, 92a, 93a) de chacune des parties découpées et pliées (60, 61, 62, 63, 70, 71, 72, 73, 80, 81, 82, 83, 90, 91, 92, 93) est agencée à des positions plus basses que la surface horizontale de référence qui passe par le centre de l'arbre de rotation de l'élément (23) de vis-mère.

4. Appareil (12) de coulissement de siège électrique selon la revendication 2 ou 3, dans lequel la partie d'extrémité (70b, 71b, 72b, 73b) de chacune des parties découpées et pliées (70, 71, 72, 73) est positionnée plus haut que l'extrémité supérieure (21c) de la paroi (21b) du rail inférieur (21) dans un état où le rail supérieur (76) et le rail inférieur (21) sont engagés; et où la partie de pliage (70a, 71a, 72a, 73a) est positionnée plus bas que la surface horizontale de référence qui passe par le centre de l'arbre de rotation de l'élément (23) de vis-mère.

5. Appareil (12) de coulissement de siège électrique selon la revendication 2 ou 3, dans lequel la partie de pliage (60a, 61a, 62a, 63a) de chacune des parties découpées et pliées (60, 61, 62, 63) est positionnée plus haut que l'extrémité supérieure (21c) de la paroi (21b) du rail inférieur (21) dans un état où le rail supérieur (22) et le rail inférieur (21) sont engagés; et où la partie d'extrémité (60b, 61b, 62b, 63b) est positionnée plus bas que la surface horizontale de référence qui passe par le centre de l'arbre de rotation de l'élément (23) de vis-mère.

6. Appareil (12) de coulissement de siège électrique selon l'une quelconque des revendications 2 à 5, dans lequel chacune des parois (22b, 76b) du rail supérieur (22, 76) comporte une fente de pliage (94) formée soit approximativement en forme de U soit approximativement en forme de U inversé et une partie (95) de languette formée dans la fente de pliage (94); et où
la partie de pliage (60a, 61a, 62a, 63a, 70a, 71a, 72a, 73a) est formée en pliant la partie (95) de languette vers une partie intérieure d'une partie (22d, 76d) d'ouverture s'ouvrant vers le bas du rail supérieur (22, 76).

7. Appareil (12) de coulissement de siège électrique selon l'une ou l'autre des revendications 1 ou 2, dans lequel ladite paire de parties découpées et pliées (60, 61, 62, 63, 70, 71, 72, 73, 80, 81, 82, 83, 90, 91, 92, 93) comporte des première et deuxième paires de parties découpées et pliées (80, 81, 82, 83, 90, 91, 92, 93) pourvues à une partie supérieure et à une partie inférieure des parois du rail supérieur (86), respectivement.

8. Appareil (12) de coulissement de siège électrique selon la revendication 7 et 2, les parties de pliage (80a, 81a, 82a, 83a, 90a, 91a, 92a, 93a) des parties découpées et pliées (80, 81, 82, 83, 90, 91, 92, 93) pourvues à la partie supérieure et la partie inférieure de chacune des parois (86b) du rail supérieur (86) sont positionnées au niveau plus haut et au niveau plus bas par rapport à une surface horizontale de référence qui passe par un centre de l'arbre de rotation de l'élément (23) de vis-mère, respectivement.

9. Appareil (12) de coulissement de siège électrique selon l'une ou l'autre des revendications 7 ou 8, les parties (80b, 81b, 82b, 83b, 90b, 91b, 92b, 93b) d'extrémité des parties découpées et pliées (80, 81, 82, 83, 90, 91, 92, 93) pourvues à la partie supérieure et la partie inférieure de chacune des parois (86b) du rail supérieur (86) sont positionnées au niveau plus haut et au niveau plus bas par rapport à une surface horizontale de référence qui passe par un centre de l'arbre de rotation de l'élément (23) de vis-mère, respectivement.

10. Appareil (12) de coulissement de siège électrique selon l'une quelconque des revendications 7 à 9, comprenant en plus:
une fente (96) de pliage ayant une forme approximativement de U et formée sur chacune des parois (86b) du rail supérieur (86); et
une partie (98) de languette formée dans la fente (96) de pliage; où
la partie (80a, 81a, 82a, 83a, 90a, 91a, 92a, 93a) de pliage est formée en pliant la partie (98) de languette vers une partie intérieure d'une partie (86d) d'ouverture s'ouvrant vers le bas du rail supérieur (86).
